# EUROPÄISCHE PATENTSCHRIFT

(11) **EP 2 596 233 B1**
(45) Veröffentlichungstag und Bekanntmachung des Hinweises auf die Patenterteilung: **31.05.2017**
(21) Anmeldenummer: 11734141.2
(22) Anmeldetag: 22.07.2011
(51) Int. Cl.: F02P 19/02, F02N 19/02, F02N 11/08

(54) **VERFAHREN UND VORRICHTUNG ZUR STEUERUNG DES GLÜHVERHALTENS EINER GLÜHSTIFTKERZE EINES VERBRENNUNGSMOTORS**
METHOD AND DEVICE FOR CONTROLLING THE IGNITION BEHAVIOUR OF A SHEATHED-TYPE GLOW PLUG OF A COMBUSTION ENGINE
PROCÉDÉ ET DISPOSITIF DE COMMANDE DU COMPORTEMENT D'INCANDESCENCE D'UNE BOUGIE-CRAYON INCANDESCENTE D'UN MOTEUR À COMBUSTION INTERNE

(30) Priorität: 23.07.2010 DE 102010038337
(43) Veröffentlichungstag der Anmeldung: 29.05.2013
(73) Patentinhaber: Robert Bosch GmbH, 70442 Stuttgart (DE)
(72) Erfinder: KAPPELMANN, Peter, 70565 Stuttgart (DE)
(86) Internationale Anmeldenummer: PCT/EP2011/062595
(87) Internationale Veröffentlichungsnummer: WO 2012/010679

(56) Entgegenhaltungen:
- DE-A1- 4 015 558
- DE-A1- 19 906 950
- DE-A1-102005 045 231
- DE-A1-102009 017 743
- FR-A3- 2 899 649
- GB-A- 2 466 275
- US-A- 5 778 844

## Beschreibung

### Stand der Technik

Verfahren zur Steuerung des Glühverhaltens einer Glühstiftkerze eines Verbrennungsmotors, bei welchem nach einem Initialisierungsvorgang mindestens eine Glühstiftkerze in dem Verbrennungsmotor vorgeglüht wird, um die Zündung des Kraftstoff-Luft-Gemisches und somit einen Start des Verbrennungsmotors zu unterstützen sowie eine Vorrichtung zur Durchführung des Verfahrens.

Um einem Kraftfahrzeug mit einem Verbrennungsmotor, insbesondere einem Dieselmotor, ein verbessertes Startverhalten zu ermöglichen, werden in den Zylindern des Verbrennungsmotors Glühstiftkerzen eingesetzt, welche neben der Verbesserung des Zündverhaltens des Verbrennungsmotors gleichzeitig noch den Vorteil haben, dass sie eine Kraftstoffverbrauchs- bzw. -emissionsreduzierung hervorrufen. Zur korrekten Ermittlung der an der Glühstiftkerze anliegenden Spannung wird eine Ablaufsteuerung in Form eines Zustandsgraphen berechnet. In Abhängigkeit des aus dem Zustandsgraphen ermittelten tatsächlichen Zustands des Verbrennungsmotors wird die Spannung, welche an der Glühstiftkerze angelegt werden muss, ermittelt.

Solch ein Zustandsgraph, der als Software in einem Motorsteuergerät bzw. einem Glühzeitsteuergerät des Kraftfahrzeuges implementiert ist, berücksichtigt derzeit nicht alle möglichen Betriebszustände des Verbrennungsmotors. Hieraus resultieren Probleme in der eindeutigen Erkennung und Zuordnung dieser Zustände des Verbrennungsmotors, was sich nachteilig auf die Spannungsansteuerung der Glühstiftkerzen auswirkt, da diese von den erkannten Betriebszuständen des Verbrennungsmotors abhängt. Deshalb müssen in vielen Fällen Hilfszustände definiert werden, um die nicht in dem Zustandsgraphen berücksichtigten Betriebszustände des Verbrennungsmotors ausreichend bei der Spannungsansteuerung der Glühstiftkerzen zu berücksichtigen.

Ein Verfahren zur Ansteuerung einer Glühkerze ist bereits aus der DE 10 2005 045 231 A1 oder der DE 10 2009 017 743 A1 bekannt.

### Offenbarung der Erfindung

Der Erfindung liegt somit die Aufgabe zugrunde, ein Verfahren und eine Vorrichtung zur Steuerung des Glühverhaltens einer Glühstiftkerze eines Verbrennungsmotors anzugeben, bei welchem alle denkbaren Betriebszustände des Verbrennungsmotors bei der Spannungsansteuerung der Glühstiftkerze korrekt berücksichtigt werden.

Erfindungsgemäß wird die Aufgabe dadurch gelöst, dass ein Verfahren zur Steuerung des Glühverhaltens einer Glühstiftkerze eines Verbrennungsmotors offenbart wird, bei welchem nach einem Initialisierungsvorgang mindestens eine Glühstiftkerze vorgeglüht wird, um die Zündung des Kraftstoff-Luft-Gemisches und somit einen Start des Verbrennungsmotors zu unterstützen, wobei die mindestens eine Glühstiftkerze nach Abschaltung des Verbrennungsmotors nachglüht. Um den Verbrennungsmotor beim Auftreten aller denkbaren Betriebszustände immer mit der korrekten Glühstiftkerzentemperatur anzusteuern, wird nach einem Abschalten des bereits gestarteten Verbrennungsmotors das Nachglühen der mindestens einen Glühstiftkerze unterbrochen. Dadurch wird sichergestellt, dass die Glühstiftkerzen nicht im Betrieb sind, wenn der Verbrennungsmotor nicht arbeitet und kein Zündvorgang ausgeführt wird. Dadurch wird die Lebensdauer der Glühstiftkerze verlängert. Bei einem erneuten Start erfolgt kein Vorglühen, sondern das Nachglühen wird wieder aufgenommen.

In einer Ausgestaltung wird das Nachglühen der mindestens einen Glühstiftkerze in annähernd einem Zeitraum des Nachlaufens eines die Glühzeitsteuerung der Glühstiftkerze ausführenden Steuergerätes nach Abschalten des Verbrennungsmotors unterbrochen. Dass hat den Vorteil, dass die Ansteuerung der Glühstiftkerze zur Erzielung der notwendigen Zündtemperatur des Kraftstoff-Luft-Gemisches durch das Steuergerät ausgesetzt wird, weshalb die Glühstiftkerze nicht weiter beansprucht wird.

In einer Variante wird das Nachglühen der mindestens einen Glühstiftkerze nach einem plötzlichen, unbeabsichtigten Ausschalten des Verbrennungsmotors unterbrochen. Das hat den Vorteil, dass auch bei einem "Abwürgen" des Verbrennungsmotors sofort das Ansteuern der Glühstiftkerzen unterbrochen wird, wodurch die Lebensdauer der Glühstiftkerze verlängert wird.

Alternativ wird das Nachglühen der mindestens einen Glühstiftkerze unterbrochen, wenn der Verbrennungsmotor aufgrund des Anhaltens des Kraftfahrzeuges ausgeschaltet wird. Somit wird sichergestellt, dass jeweils immer beim Ausschalten des Verbrennungsmotors das Nachglühen der Glühstiftkerze durch eine Unterbrechung der Ansteuerung abgeschaltet wird.

Vorteilhafterweise wird das Nachglühen der mindestens einen Glühstiftkerze beim Ausführen einer Start-/Stopp-Funktion des Kraftfahrzeuges unterbrochen. Durch die Unterstützung dieser Funktionalität, was bedeutet, dass das Nachglühen der Glühstiftkerze beim Anhalten des Fahrzeuges, beispielsweise an einer Ampel, unterbrochen wird, während es sofort beim Weiterfahren des Kraftfahrzeuges, also beim Start des Verbrennungsmotors, wieder aufgenommen wird, wird die Glühstiftkerze nur in den Zeiträumen elektrisch angesteuert, wenn die Betriebszustände des Verbrennungsmotors eine Zündung des Kraftstoff-Luft-Gemisches tatsächlich erfordern. Die Glühstiftkerze wird somit geschont und die Lebensdauer der Glühstiftkerze verlängert.

Vorteilhafterweise wird bei einem Wiederstart des Verbrennungsmotors in einem vorgegebenen Zeitraum nach dem Abschalten des Verbrennungsmotors das Nachglühen zum Start des Verbrennungsmotors unmittelbar wieder aufgenommen. Dabei wird die Glühstiftkerze immer mit einer solchen Spannung angesteuert, welche zur Erzielung der Zündtemperatur des Kraftstoff-Luft-Gemisches notwendig ist. Hilfszustände, mittels welchen bisher nicht berücksichtigte Betriebszustände konstruiert wurden, können somit entfallen. Es wird gewährleistet, dass nach einem Ausschalten des Verbrennungsmotors die Ansteuerung der Glühstiftkerze immer sofort unterbrochen wird.

Eine weitere Weiterbildung der Erfindung betrifft eine Vorrichtung zur Steuerung des Glühverhaltens einer Glühstiftkerze eines Verbrennungsmotors, bei welcher nach einem Initialisierungsvorgang mindestens eine Glühstiftkerze vorgeglüht wird, um die Zündung des Kraftstoff-Luft-Gemisches und somit einen Start des Verbrennungsmotors zu unterstützen. Um den Verbrennungsmotor bei allen denkbaren auftretenden Betriebszuständen immer mit einer korrekten Glühkerzenspannung zur Erzeugung einer erforderlichen Zündtemperatur für das Kraftstoff-Luft-Gemisch ansteuern zu können, sind Mittel vorhanden, welche in Abhängigkeit von dem Initialisierungsvorgang das Vorglühen der mindestens einen Glühstiftkerze unmittelbar oder nach Ablauf eines vorgegebenen Zeitfensters auslösen. Somit werden Hilfskonstruktionen, welche bisher notwendig waren, um ein verzögertes Vorglühen der Glühstiftkerze zu realisieren, unterbunden. Dieser Zustand wird nun als vollwertiger Zustand in der Ablaufsteuerung der Glühstiftkerze berücksichtigt.

Insbesondere empfangen die Mittel Signale eines Sitzbelegungssensors und/oder eines Türöffnungssensors des Kraftfahrzeuges, welche als Initialisierungssignal bewertet werden. Auf diese Art und Weise kann das Steuergerät sofort darauf reagieren, ob die Glühzeitsteuerung eingeleitet werden soll oder nicht.

Die Erfindung lässt zahlreiche Ausführungsformen zu. Eine davon soll anhand der in der Zeichnung dargestellten Figuren näher erläutert werden.

Es zeigt:
- Figur 1:: Prinzipdarstellung eines Glühsystems in einem Kraftfahrzeug
- Figur 2:: eine Ablaufsteuerung für ein Steuergerät eines Kraftfahrzeuges zur Glühzeitsteuerung.

Kalte Verbrennungsmotoren, insbesondere Dieselmotoren, benötigen bei Umgebungstemperaturen von <40°C eine Starthilfe zur Zündung des in dem Verbrennungsmotor eingeleiteten Kraftstoff-Luft-Gemisches. Als Starthilfe werden Glühsysteme eingesetzt, welche aus Glühstiftkerzen, einem Glühzeitsteuergerät und einer Glühsoftware, die in einem Motorsteuergerät oder dem Glühzeitsteuergerät abgelegt ist, besteht. Außerdem werden Glühsysteme auch zur Verbesserung der Emission des Fahrzeuges benutzt. Weitere Einsatzgebiete des Glühsystems bestehen im Brennerabgassystem, bei der Standheizung, bei der Vorwärmung von Kraftstoff (Flex Fuel) oder der Vorwärmung des Kühlwassers.

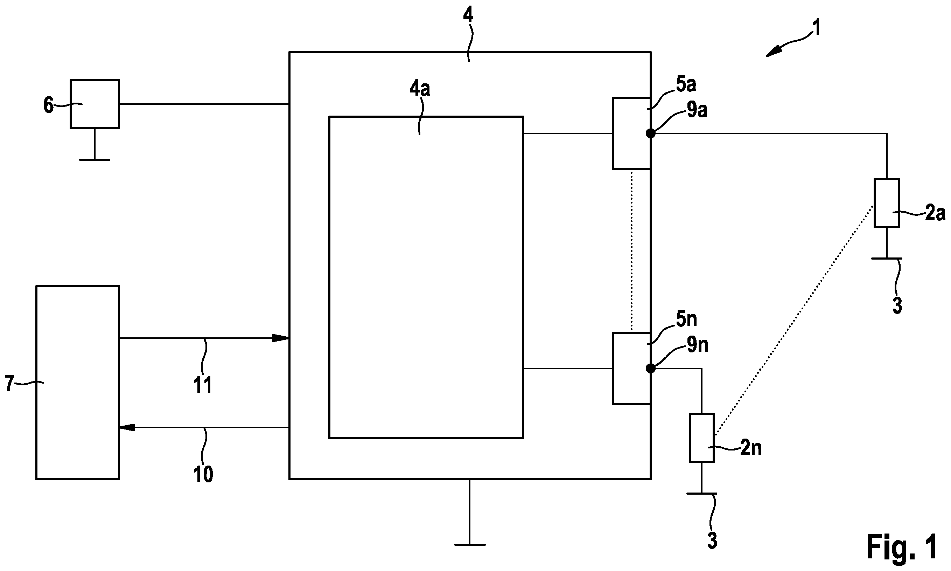

Figur 1 zeigt ein solches Glühsystem, bei welchem mehrere Glühstiftkerzen 2a bis 2n vorhanden sind, wobei jede Glühstiftkerze 2a bis 2n in jeweils einen Zylinder eines nicht weiter dargestellten Brennraumes des Verbrennungsmotors ragt. Die Glühstiftkerzen 2a bis 2n sind identisch aufgebaut und stellen übliche Niederspannungsglühstiftkerzen dar. In Figur 1 sind die Glühstiftkerzen 2a bis 2n der Einfachheit halber als Ersatzwiderstand dargestellt, welche an die Masse 3 des Verbrennungsmotors führen.

Die Glühstiftkerzen 2a bis 2n sind mit einem Glühzeitsteuergerät 4 verbunden, welches für jede Glühstiftkerze 2a bis 2n einen Leistungshalbleiter 5a bis 5n aufweist. Das Glühzeitsteuergerät 4 umfasst einen Mikrocontroller 4a zur Verarbeitung ein- und ausgehender Signale. Alternativ kann anstelle des Mikrocontrollers 4a auch ein ASIC verwendet werden. Weiterhin ist eine Bordnetzspannung 6 mit dem Glühzeitsteuergerät 4 verbunden, welche die Glühstiftkerzen 2a bis 2n über die Leistungshalbleiter 5a bis 5n mit der erforderlichen Effektivspannung versorgt.

Das Glühzeitsteuergerät 4 führt an ein Motorsteuergerät 7, welches wiederum mit dem nicht weiter dargestellten Verbrennungsmotor verbunden ist. Das Motorsteuergerät 7 und das Glühzeitsteuergerät 4 weisen eine Schnittstelle auf. Diese kann sowohl aus einer Eindraht- als auch einer Zweidraht-Verbindung 10, 11 bestehen. Über diese Schnittstelle werden Daten zwischen dem Motorsteuergerät 7 und dem Glühzeitsteuergerät 4 ausgetauscht, wobei darüber sowohl die Ansteuerung des Glühzeitsteuergerätes erfolgt als auch die Diagnosekommunikation. Das Glühzeitsteuergerät 4 gibt über die Leistungshalbleiter 5a bis 5n an die Glühstiftkerzen 2a bis 2n ein pulsbreitenmoduliertes Ausgangssignal ab, welches an der jeweiligen Glühstiftkerze 2a bis 2n die erforderliche Glühstiftkerzensteuerspannung einstellt.

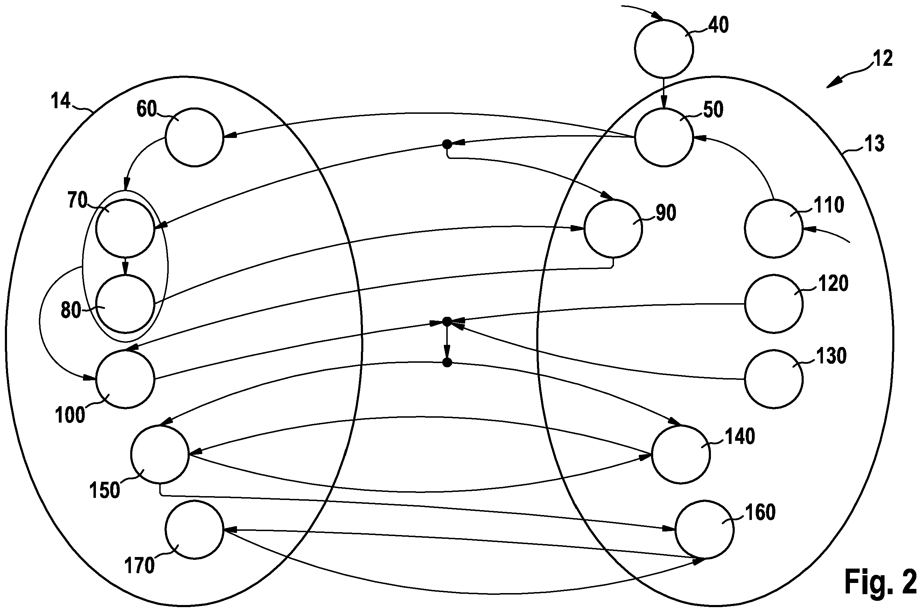

In Figur 2 ist eine Ablaufsteuerung zur Ermittlung einer korrekten Glühstiftkerzenansteuerung dargestellt, welche auch als Zustandsgraph bezeichnet wird. Ein solcher Zustandsgraph ist entweder in dem Motorsteuergerät 7 oder in dem Glühzeitsteuergerät 4 enthalten. Der Zustandsgraph 12 ist in zwei Gruppen unterteilt, wobei die Gruppe 13 alle Zustände enthält, die kein Glühen der Glühstiftkerze 2a - 2n erfordern, während die Gruppe 14 alle die Zustände des Verbrennungsmotors umfasst, die ein Glühen der Glühstiftkerze 2a - 2n bedingen.

In einem Initialisierungsschritt 40 wird der Ansteuervorgang der Glühstiftkerzen gestartet. Im Schritt 50 wird dazu auf eine Information über die Temperatur des Verbrennungsmotors gewartet. Wird die Initialisierung durch Signale, die nicht unmittelbar in die Zündelektrik des Kraftfahrzeuges eingreifen, wie beispielsweise das Öffnen der Fahrzeugtür oder die Belegung eines Fahrzeugsitzes, ausgelöst, wird vom Schritt 50 in den Schritt 60 übergegangen, wo noch ein vorgegebener Zeitraum abgewartet wird, bevor das Vorglühen der Glühstiftkerzen 2a - 2n in dem Schritt 70 gestartet wird. Wird die Initialisierung durch die Einführung eines Zündschlüssels in ein Zündschloss ausgelöst, wird vom Schritt 50 direkt in den Schritt 70 übergegangen, welcher das sofortige Vorglühen der Glühstiftkerze 2a - 2n vorgibt. Beim Vorglühen handelt es sich um einen Betrieb der Glühkerze der darauf abzielt möglichst schnell eine gewünschte Betriebstemperatur der Glühkerze zu erreichen. Dabei wir eine besonders hohe elektrische Spannung an die Glühkerze angelegt, die bei einem kontinuierlichen Anlegen zu einer Überhitzung der Glühkerze führen würde. Mit dem Erreichen der gewünschten Temperatur wird dann die erhöhte Spannung reduziert. Ein kurzzeitiges Überschwingen der Temperatur wird dabei in Kauf genommen.

Ist nach einer vorgegebenen Zeit, nachdem das Vorglühen in Schritt 70 begonnen hat, der Verbrennungsmotor noch nicht gestartet, wird zu einem Bereitschaftsglühen im Schritt 80 übergegangen. Die zeitliche Steuerung des Übergangs von Vorglühen zu Bereitschaftglühen hängt beispielsweise von der Ausgangstemperatur des Motors vor dem Start des Vorglühens ab. Dabei handelt es sich um eine Standby-Funktion, die ein sofortiges Starten des Verbrennungsmotors ermöglicht. Nach einer abgelaufenen Zeit, während welcher der Verbrennungsmotor auch weiterhin nicht gestartet wurde, wird in einen Nichtvorglühzustand des Schrittes 90, welcher in der Gruppe 13 angeordnet ist, übergegangen, wo die Ansteuerung der Glühstiftkerzen 2a- 2n unterbrochen wird. Wird der Verbrennungsmotor aber gestartet, wird vom Schritt 70 oder vom Schritt 80 zum Startglühen im Schritt 100 übergegangen. Ab diesem Zeitpunkt läuft der Verbrennungsmotor. Bei dem Startglühen handelt es sich um einen Betriebszustand der Glühkerze bei der eine Temperatur der Glühkerze eingestellt wird die einen raschen und sicheren Start des Motors gewährleistet. Im Vergleich zum Vorglühen ist der Energieeintrag in die Glühkerze pro Zeit geringer da nicht die schnelle Aufheizung der Glühkerze erreicht werden muss.

Nach dem Start des Motors kann noch ein Nachglühen der Glühkerze vorgesehen sein bei dem die Glühkerze typischerweise auf eine geringere Temperatur gebracht wird als dies beim Startglühen der Fall ist. Durch ein solche Nachglühen wird der Betrieb des Motors stabilisiert bis alle Teile des Motors die übliche Betriebstemperatur erreicht wird.

Sollte der schon gestartete Motor aber wieder abgeschaltet werden, wird in der Gruppe 13 unterschieden, ob das Abschalten des Motors durch ein Anhalten des Kraftfahrzeuges, beispielsweise an einer Ampel, erfolgt ist, was im Schritt 120 berücksichtigt wird, oder ob es sich um ein plötzliches "Abwürgen" des Verbrennungsmotors handelt, was im Schritt 130 berücksichtigt wird. Sowohl nach dem Anhalten an der Ampel in Schritt 120 als auch nach dem plötzlichen "Abwürgen" des Verbrennungsmotors in Schritt 130 wird davon ausgegangen, dass der Verbrennungsmotor so schnell wie möglich wieder gestartet wird. In den Betriebszuständen 120, 130 wird dann das Nachglühen der Glühkerze unterbrochen. Unterbrochen bedeutet hier, dass bei einem erneuten Starten des Motors ausgehend von den Zuständen 120 und 130 nicht wieder in den Zustand Startglühen 100 gesprungen wird, sondern in den Zustand 150 in dem einen Nachglühen erfolgt. Bei einem Abwürgen des Motors oder einem Start-Stopp Betrieb soll nicht das normale Startglühen erfolgen sondern das Nachglühen wird fortgesetzt. Durch die verringerte Temperatur beim Nachglühen wird die Glühkerze weniger stark belastet als beim Startglühen.

Im Schritt 110 der Gruppe 13 ist vorgesehen, dass keine Nachglühaktivität der Glühstiftkerze 2a - 2n erfolgt, wenn der Verbrennungsmotor gestoppt ist. Dieser Schritt 110 führt auf den Schritt 50, wo die Temperatur des Verbrennungsmotors bestimmt wird, in deren Abhängigkeit die Ablaufsteuerung der Glühstiftkerzen 2a - 2n in der erläuterten Art und Weise weiterverfolgt wird.

Ausgehend von den Schritten 100, 120 oder 130 wird entschieden, ob ein Nachglühen der Glühstiftkerze 2a - 2n notwendig ist, was im Schritt 150 der Gruppe 14 vorgesehen ist, oder ob auf ein solches Nachglühen im Schritt 140 der Gruppe 13 verzichtet werden kann. In Abhängigkeit von dem aktuellen Betriebszustand des Verbrennungsmotors wird dann festgelegt, welcher Schritt 140 oder 150 realisiert wird. Wird beispielsweise festgestellt, dass sich der Verbrennungsmotor im Leerlauf befindet und kein Gas durch den Fahrzeugführer gegeben wird, wird im Schritt 150 der Gruppe 14 das Nachglühen der Glühstiftkerze 2a - 2n ausgeführt. Wird allerdings detektiert, dass der Fahrzeugführer das Gaspedal stark betätigt und demzufolge keine Verbrennungsunterstützung notwendig ist, wird in der Gruppe 13 der Schritt 140 in Form des Nichtnachglühens unterbrochen.

Befindet sich der Verbrennungsmotor in einem Betriebszustand, welcher den Schritt 140 vorgibt, wo ein Nachglühen nicht vorgesehen ist, wird nach einem gewissen Zeitablauf von der Unterbrechung des Nachglühens in eine vollständige Abschaltung des Glühzustandes der Glühstiftkerze 2a bis 2n übergegangen, was im Schritt 160 der Gruppe 13 gekennzeichnet ist. Damit ist die Nachglühzeit abgelaufen und die Ablaufsteuerung der Glühstiftkerze 2a bis 2n abgeschlossen.

In einem außerhalb der normalen Ablaufsteuerung des Verbrennungsmotors auftretenden Zustand wird im Schritt 170 der im Verbrennungsmotor enthaltene Partikelfilter der Glühstiftkerzen 2a-2n gereinigt. Dabei wird zur Betriebsweise des Verbrennungsmotors eine hohe elektrische Leistung aus der Batterie 6 gezogen. Nach erfolgter Einspritzung ist aufgrund der Aktivierung der Glühstiftkerzen 2a - 2n eine hohe Abgastemperatur im Verbrennungsraum des Verbrennungsmotors vorhanden, wodurch die einzelnen Partikel verbrannt und somit der Filter gereinigt wird.

## Patentansprüche

1. Verfahren zur Steuerung des Glühverhaltens einer Glühstiftkerze eines Verbrennungsmotors, bei welchem nach einem Initialisierungsvorgang mindestens eine Glühstiftkerze (2a - 2n) vorgeglüht wird, um die Zündung des Kraftstoff-Luft-Gemisches und somit einen Start des Verbrennungsmotors zu unterstützen, wobei die mindestens eine Glühstiftkerze (2a - 2n) nach dem Start des Verbrennungsmotors nachglüht, **dadurch gekennzeichnet, dass** nach dem Abschalten des bereits gestarteten Verbrennungsmotors ein Nachglühen der mindestens einen Glühstiftkerze (2a - 2n) unterbrochen wird und bei einem erneuten Start kein Vorglühen erfolgt sondern das Nachglühen wieder aufgenommen wird.

2. Verfahren nach Anspruch 1, **dadurch gekennzeichnet, dass** das Nachglühen der mindestens einen Glühstiftkerze (2a - 2n) in annähernd einem Zeitraum des Nachlaufens eines, die Glühzeitsteuerung der Glühstiftkerze (2a - 2n) ausführenden Steuergerätes (4, 7) nach Abschalten des Verbrennungsmotors unterbrochen wird.

3. Verfahren nach Anspruch 1 oder 2, **dadurch gekennzeichnet, dass** das Nachglühen der mindestens einen Glühstiftkerze (2a - 2n) nach einem plötzlichen, unbeabsichtigten Ausschalten des Verbrennungsmotors unterbrochen wird.

4. Verfahren nach Anspruch 1 oder 2, **dadurch gekennzeichnet, dass** das Nachglühen der mindestens einen Glühstiftkerze (2a - 2n) unterbrochen wird, wenn der Verbrennungsmotor aufgrund des Anhaltens des Kraftfahrzeuges ausgeschaltet wird.

5. Verfahren nach Anspruch 4, **dadurch gekennzeichnet, dass** das Nachglühen der mindestens einen Glühstiftkerze (2a - 2n) beim Ausführen einer Start-/Stopp-Funktion des Kraftfahrzeuges unterbrochen wird.

6. Verfahren nach mindestens einem der vorhergehenden Ansprüche, **dadurch gekennzeichnet, dass** bei einem Wiederstart des Verbrennungsmotors in einem vorgegebenen Zeitraum nach dem Abschalten des Verbrennungsmotors das Nachglühen der Glühstiftkerze (2a - 2n) zum Start des Verbrennungsmotors unmittelbar wieder aufgenommen wird.

7. Vorrichtung zur Steuerung des Glühverhaltens einer Glühstiftkerze eines Verbrennungsmotors, bei welchem nach einem Initialisierungsvorgang mindestens eine Glühstiftkerze (2a - 2n) vorgeglüht wird, um die Zündung des Kraftstoff-Luft-Gemisches und somit einen Start des Verbrennungsmotors zu unterstützen, wobei Mittel vorgesehen sind die die mindestens eine Glühstiftkerze (2a - 2n) nach dem Start des Verbrennungsmotors nachglühen, **dadurch gekennzeichnet, dass** Mittel vorhanden sind, welche nach dem Abschalten des bereits gestarteten Verbrennungsmotors ein Nachglühen der mindestens einen Glühstiftkerze (2a - 2n) unterbrechen und bei einem erneuten Start kein Vorglühen sondern das Nachglühen wieder aufnehmen.

## Claims

1. Method for controlling the heating behaviour of a sheathed-element glow plug of an internal combustion engine, in which, after an initialization process, preheating of at least one sheathed-element glow plug (2a - 2n) is implemented in order to assist the ignition of the fuel-air mixture and thus starting of the internal combustion engine, wherein postheating of the at least one sheathed-element glow plug (2a - 2n) is implemented after the starting of the internal combustion engine, **characterized in that**, after the deactivation of the already started internal combustion engine, postheating of the at least one sheathed-element glow plug (2a - 2n) is interrupted and, upon a restart, preheating is not implemented but rather the postheating is resumed.

2. Method according to Claim 1, **characterized in that** the postheating of the at least one sheathed-element glow plug (2a - 2n) is interrupted in approximately a time period of afterrunning of a control unit (4, 7), which performs the heating time control of the sheathed-element glow plug (2a - 2n), after deactivation of the internal combustion engine.

3. Method according to Claim 1 or 2, **characterized in that** the postheating of the at least one sheathed-element glow plug (2a - 2n) is interrupted after a sudden inadvertent deactivation of the internal combustion engine.

4. Method according to Claim 1 or 2, **characterized in that** the postheating of the at least one sheathed-element glow plug (2a - 2n) is interrupted if the internal combustion engine is deactivated owing to the stoppage of the motor vehicle.

5. Method according to Claim 4, **characterized in that** the postheating of the at least one sheathed-element glow plug (2a - 2n) is interrupted in the event of a start/stop function of the motor vehicle being executed.

6. Method according to at least one of the preceding claims, **characterized in that**, upon a restart of the internal combustion engine in a predefined time period after the deactivation of the internal combustion engine, the postheating of the sheathed-element glow plug (2a - 2n) is directly resumed again for the starting of the internal combustion engine.

7. Device for controlling the heating behaviour of a sheathed-element glow plug of an internal combustion engine, in which, after an initialization process, preheating of at least one sheathed-element glow plug (2a - 2n) is implemented in order to assist the ignition of the fuel-air mixture and thus starting of the internal combustion engine, wherein means are provided which implement postheating of the at least one sheathed-element glow plug (2a - 2n) after the starting of the internal combustion engine, **characterized in that** means are provided which, after the deactivation of the already started internal combustion engine, interrupt postheating of the at least one sheathed-element glow plug (2a - 2n) and, upon a restart, do not implement preheating but rather resume the postheating.

## Revendications

1. Procédé de commande du comportement d'incandescence d'une bougie-crayon de préchauffage d'un moteur à combustion interne, dans lequel on préchauffe, après une opération d'initialisation, au moins une bougie-crayon de préchauffage (2a-2n), afin de soutenir l'allumage du mélange carburant-air et ainsi un démarrage du moteur à combustion interne, dans lequel ladite au moins une bougie-crayon de préchauffage (2a-2n) continue à chauffer après le démarrage du moteur à combustion interne, **caractérisé en ce qu'**après l'arrêt du moteur à combustion interne déjà démarré, on interrompt un post-chauffage de ladite au moins une bougie-crayon de préchauffage (2a-2n) et lors d'un nouveau démarrage on n'effectue aucun préchauffage mais le post-chauffage est de nouveau repris.

2. Procédé selon la revendication 1, **caractérisé en ce que** l'on interrompt le post-chauffage de ladite au moins une bougie-crayon de préchauffage (2a-2n) dans approximativement un intervalle de temps de retard d'un appareil de commande (4, 7) effectuant la commande temporelle du chauffage de la bougie-crayon de préchauffage (2a-2n) après l'arrêt du moteur à combustion interne.

3. Procédé selon la revendication 1 ou 2, **caractérisé en ce que** l'on interrompt le post-chauffage de ladite au moins une bougie-crayon de préchauffage (2a-2n) après une coupure soudaine imprévue du moteur à combustion interne.

4. Procédé selon la revendication 1 ou 2, **caractérisé en ce que** l'on interrompt le post-chauffage de ladite au moins une bougie-crayon de préchauffage (2a-2n), lorsque le moteur à combustion interne est coupé en raison de l'arrêt du véhicule automobile.

5. Procédé selon la revendication 4, **caractérisé en ce que** l'on interrompt le post-chauffage de ladite au moins une bougie-crayon (2a-2n) lors de l'exécution d'une fonction Start-Stop du véhicule automobile.

6. Procédé selon au moins une des revendications précédentes, **caractérisé en ce que**, lors d'un nouveau démarrage du moteur à combustion dans un intervalle de temps prédéterminé après la coupure du moteur à combustion interne, on reprend de nouveau immédiatement le post-chauffage de la bougie-crayon de préchauffage (2a-2n) pour le démarrage du moteur à combustion interne.

7. Dispositif de commande du comportement d'incandescence d'une bougie-crayon de préchauffage d'un moteur à combustion interne, dans lequel on préchauffe, après une opération d'initialisation, au moins une bougie-crayon de préchauffage (2a-2n), afin de soutenir l'allumage du mélange carburant-air et ainsi un démarrage du moteur à combustion interne, dans lequel il est prévu des moyens qui permettent le post-chauffage de ladite au moins une bougie-crayon de préchauffage (2a-2n) après le démarrage du moteur à combustion interne, **caractérisé en ce qu'**il se trouve des moyens qui interrompent un post-chauffage de ladite au moins une bougie-crayon de préchauffage (2a-2n) après la coupure du moteur à combustion interne déjà démarré et qui lors d'un nouveau démarrage ne reprennent pas de préchauffage mais reprennent de nouveau le post-chauffage.
